# FASCICULE DE BREVET EUROPEEN

(11) **EP 3 610 132 B1**
(45) Date de publication et mention de la délivrance du brevet: **31.05.2023**
(21) Numéro de dépôt: 18728682.8
(22) Date de dépôt: 10.04.2018
(51) Int. Cl.: F01D 5/18

(54) **AUBE À CIRCUIT DE REFROIDISSEMENT PERFECTIONNÉ**
SCHAUFEL MIT VERBESSERTEM KÜHLKREISLAUF
BLADE COMPRISING AN IMPROVED COOLING CIRCUIT

(30) Priorité: 10.04.2017 FR 1700388
(43) Date de publication de la demande: 19.02.2020
(73) Titulaire: Safran, 75015 Paris (FR)
(72) Inventeur: FLAMME, Thomas, Michel, 77550 Moissy-Cramayel (FR); CARIOU, Romain, Pierre, 77550 Moissy-Cramayel (FR); PAQUIN, Sylvain, 77550 Moissy-Cramayel (FR); ROLLINGER, Adrien, Bernard, Vincent, 77550 Moissy-Cramayel (FR)
(74) Mandataire: Cabinet Beau de Loménie
(86) Numéro de dépôt international: PCT/FR2018/000079
(87) Numéro de publication internationale: WO 2018/189432

(56) Documents cités:
- EP-A2- 1 526 250
- US-A- 5 356 265
- US-B1- 7 611 330

## Description

### DOMAINE DE L'INVENTION

Le présent exposé concerne une aube, par exemple une aube pour turbine pouvant être utilisée au sein d'une turbomachine d'aéronef, et plus particulièrement le refroidissement interne d'une telle aube.

### ARRIÈRE-PLAN TECHNOLOGIQUE

Une turbomachine d'aéronef comprend usuellement une chambre de combustion dont les gaz de combustion entraînent en rotation une ou plusieurs turbines. Pour protéger les aubes de turbine des températures élevées auxquelles elles sont ainsi soumises, en particulier les aubes mobiles, il est connu de prévoir que les aubes soient creuses de façon à faire circuler à l'intérieur des aubes un fluide de refroidissement, par exemple de l'air relativement froid prélevé en amont de la chambre de combustion.

La demande internationale WO 2015/162389 A1 de la Demanderesse décrit une aube pour turbine de turbomachine comprenant un circuit de refroidissement à homogénéité améliorée. En particulier, cette aube comporte plusieurs cavités dans l'épaisseur de la pale.

La demande US 7 611 330 A1 décrit une autre aube comportant plusieurs cavités.

Or, les besoins accrus en performance conduisent à augmenter le rendement de la turbomachine, et par suite à augmenter la température des gaz de combustion passant dans les turbines sans augmenter le débit de fluide de refroidissement à l'intérieur des aubes. Ainsi, bien que l'aube précitée présente des résultats satisfaisants, il existe un besoin pour une aube résistant encore davantage aux températures élevées.

### PRÉSENTATION DE L'INVENTION

A cet effet, le présent exposé concerne une aube pour turbine selon la revendication 1, comprenant un pied d'aube définissant une extrémité radialement interne de l'aube et une pale s'étendant radialement vers l'extérieur à partir du pied d'aube et présentant une paroi d'intrados et une paroi d'extrados raccordée à la paroi d'intrados en un bord d'attaque et un bord de fuite de la pale, la pale comprenant au moins un premier circuit de refroidissement interne comportant au moins une cavité d'intrados s'étendant radialement le long de la paroi d'intrados et d'une première paroi interne agencée entre la paroi d'intrados et la paroi d'extrados, au moins une cavité d'extrados s'étendant radialement le long de la paroi d'extrados et d'une deuxième paroi interne, agencée entre la paroi d'intrados et la paroi d'extrados, l'aube étant caractérisée en ce que le premier circuit de refroidissement comporte en outre au moins une cavité interne traversante définie entre deux parois traversantes s'étendant chacune entre la paroi d'intrados et la paroi d'extrados, à distance du bord d'attaque et du bord de fuite, la cavité interne traversante s'étendant radialement le long de la paroi d'intrados et de la paroi d'extrados, dans laquelle la cavité d'intrados, la cavité d'extrados et la cavité interne traversante sont fluidiquement connectées en série.

Dans le présent exposé, sauf précision contraire, l'amont et l'aval sont définis par rapport au sens d'écoulement normal du gaz (de l'amont vers l'aval) à travers la turbomachine. L'amont et l'aval s'entendent par rapport au gaz circulant à l'extérieur de l'aube, généralement du bord d'attaque vers le bord de fuite, et non au fluide de refroidissement circulant à l'intérieur de l'aube. Par souci de concision et sans perte de généralité, on parlera indifféremment, par la suite, de fluide de refroidissement ou plus simplement d'air.

Par ailleurs, on appelle axe de la turbine, l'axe de rotation du rotor de la turbine. La direction axiale correspond à la direction de l'axe de la turbine et une direction radiale, selon laquelle s'étend la pale, est une direction perpendiculaire à cet axe et coupant cet axe. Ainsi, la direction radiale correspond à la direction longitudinale de la pale. De même, un plan axial est un plan contenant l'axe de la turbine et un plan radial est un plan perpendiculaire à cet axe. Un plan transverse est un plan orthogonal à la direction radiale ou longitudinale. Une circonférence s'entend comme un cercle appartenant à un plan radial et dont le centre appartient à l'axe de la turbine. Une direction tangentielle ou circonférentielle est une direction tangente à une circonférence ; elle est perpendiculaire à l'axe du compresseur mais ne passe pas par l'axe.

Au sens du présent exposé, une cavité s'étend radialement le long d'une paroi si la cavité est adjacente à la paroi sur au moins la moitié de sa longueur, de préférence sensiblement toute sa longueur, dans une direction radiale. Par ailleurs, une cavité est considérée comme distincte d'une autre cavité si ces deux cavités sont séparées par une paroi sur au moins la moitié de la longueur de la pale dans une direction radiale, de préférence sensiblement toute la longueur de la pale.

Grâce à la présence de la cavité interne traversante telle que précédemment définie, les parois traversantes possèdent une liberté de déformation pour accommoder la dilatation différentielle entre les parties externes de l'aube, telles que les parois d'intrados et d'extrados, relativement chaudes, et les parties internes de l'aube, telles que les première et deuxième parois internes, relativement froides. Ainsi, la structure interne de l'aube est assouplie, ce qui limite l'apparition de contraintes dans l'aube et, par suite, augmente sa résistance aux différences de température et sa longévité. Le fait que la cavité d'intrados, la cavité d'extrados et la cavité interne traversante soient fluidiquement connectées en série permet en outre de maximiser le travail du fluide de refroidissement et d'homogénéiser la température à l'intérieur de l'aube, ce qui concourt également à la réduction des contraintes dans l'aube.

La deuxième paroi interne peut être distincte ou confondue avec la première paroi interne. Dans le cas où la deuxième paroi interne est confondue avec la première paroi interne, la cavité d'intrados et la cavité d'extrados sont adjacentes. Dans ces modes de réalisation, le sens de circulation de l'air de refroidissement peut subir un retournement, entre la cavité d'intrados et la cavité d'extrados, dans l'épaisseur de la pale. L'épaisseur de la pale indique une direction perpendiculaire à une ligne moyenne entre la paroi d'intrados et la paroi d'extrados, dans un plan transverse.

En outre, la première paroi interne et la deuxième paroi interne peuvent être chacune connectée à une desdites parois traversantes ; les première et deuxième parois internes peuvent alors être connectées à la même des parois traversantes ou à des parois traversantes distinctes.

Dans certains modes de réalisation, la cavité d'intrados, la cavité d'extrados et la cavité interne traversante sont fluidiquement connectées dans cet ordre. Le fait de connecter lesdites cavités dans l'ordre mentionné ci-dessus permet d'optimiser encore davantage le travail de l'air pour une aube mobile. En effet, du fait de la rotation de l'aubage, la force de Coriolis plaque l'air de refroidissement le long des parois intrados ou extrados de l'aube, selon que le flux d'air est montant ou descendant à l'intérieur de la pale. L'ordre précité permet de plaquer l'air contre la paroi d'intrados dans la cavité d'intrados et contre la paroi d'extrados dans la cavité d'extrados, puis à nouveau contre la paroi d'intrados dans la cavité interne traversante. Ainsi, l'interaction de l'air avec les parois d'intrados et d'extrados est maximisée tandis que l'interaction de l'air avec les parois internes est limitée, ce qui permet respectivement et concomitamment d'améliorer le refroidissement des parois d'intrados et d'extrados et de limiter le gradient thermique au sein de l'aube, entre les parois d'intrados et d'extrados d'une part et les parois internes d'autre part. En outre, comme il sera détaillé par la suite, les propriétés mécaniques de la paroi d'intrados, de la paroi d'extrados et des parois internes peuvent dépendre de la température ; en particulier, les propriétés mécaniques peuvent être sensiblement constantes jusqu'à une température seuil, puis se dégrader progressivement au-dessus de la température seuil. Ainsi, il est inutile de refroidir les parois internes endeçà de la température seuil.

Dans certains modes de réalisation, la cavité d'intrados et/ou la cavité d'extrados a une section transversale décroissante dans la direction radiale. De préférence, la cavité d'intrados peut avoir une section transversale décroissante de l'extrémité radialement interne de la pale vers l'extrémité radialement externe de la pale. Alternativement ou en complément, la cavité d'extrados peut avoir une section transversale décroissante de l'extrémité radialement externe de la pale vers l'extrémité radialement interne de la pale. Le fait que les cavités d'intrados et/ou d'extrados soient radialement convergentes améliore l'écoulement dans les cavités et permet de limiter, sinon d'éviter les tourbillons de recirculation. En outre, lorsqu'une cavité d'intrados et une cavité d'extrados sont adjacentes de part et d'autre d'une même paroi interne, incliner la paroi interne qui les sépare, par rapport à la direction radiale, permet d'obtenir la configuration précitée de manière structurellement simple, et ce que ces cavités soient en communication fluidique ou non. De plus, cette configuration est facilitée par la faible interaction de l'air avec les parois internes, en particulier lorsque l'air est plaqué contre la paroi d'intrados dans la cavité d'intrados et contre la paroi d'extrados dans la cavité d'extrados.

Dans certains modes de réalisation, la première paroi interne est connectée à une première desdites parois traversantes et la deuxième paroi interne est connectée à une deuxième desdites parois traversantes. La première paroi traversante est distincte de la deuxième paroi traversante. Il s'ensuit que la première paroi interne et la deuxième paroi interne sont distinctes. Les cavités d'intrados et d'extrados sont ainsi agencées de part et d'autre de la cavité interne traversante.

Dans certains modes de réalisation, l'aube comprend une troisième paroi traversante connectée à la première paroi interne ou à la deuxième paroi interne, le circuit de refroidissement interne comportant une deuxième cavité traversante s'étendant radialement le long de la paroi d'intrados, de la paroi d'extrados et de la troisième paroi traversante. La deuxième cavité traversante peut être interne, c'est-à-dire s'étendre à distance du bord d'attaque ou du bord de fuite, ou être définie entre la troisième paroi traversante et les parois d'intrados et d'extrados se rejoignant au bord d'attaque ou au bord de fuite. La présence de la deuxième cavité traversante permet d'assouplir encore davantage la structure interne de l'aube.

Dans certains modes de réalisation, la troisième paroi traversante étant connectée à la première paroi interne (respectivement à la deuxième paroi interne), la cavité d'intrados (respectivement cavité d'extrados) est adjacente à la première cavité traversante et à la deuxième cavité traversante. Ainsi, les première et deuxième cavités traversantes peuvent être prévues de part et d'autre de la cavité d'intrados (respectivement cavité d'extrados). Dans ces modes de réalisation, les première et deuxième cavités traversantes sont séparées par une unique cavité d'intrados (respectivement cavité d'extrados) qui s'étend radialement le long de la première cavité traversante, de la deuxième cavité traversante, de la première paroi interne (respectivement de la deuxième paroi interne) et de la paroi d'intrados (respectivement de la paroi d'extrados).

La cavité d'intrados et la cavité d'extrados sont ménagées de part et d'autre de la cavité interne traversante et un passage relie fluidiquement la cavité d'intrados à la cavité d'extrados sans passer par la cavité interne traversante. La cavité d'extrados peut, à son tour, être reliée fluidiquement à la cavité interne traversante. Dans ces modes de réalisation, la cavité d'intrados, la cavité d'extrados et la cavité interne traversante sont ménagées en forme de trombone s'enroulant sur lui-même. Ledit passage est situé de préférence à l'extrémité radialement externe de la pale.

Dans certains modes de réalisation, la cavité d'intrados est ménagée du côté du bord de fuite et la cavité d'extrados du côté du bord d'attaque par rapport à la cavité interne traversante. Ainsi, l'air de refroidissement circule, entre la cavité d'intrados et la cavité d'extrados, du bord de fuite vers le bord d'attaque, c'est-à-dire à contre-courant de l'air entraînant la turbine. L'air de refroidissement, relativement frais, peut éventuellement être évacué de la pale du côté du bord d'attaque, où il s'écoule vers l'aval le long de la pale et forme une couche protectrice de refroidissement par un film fluide qui sera décrite par la suite.

Dans certains modes de réalisation, la première paroi interne et la deuxième paroi interne sont chacune délimitée par deux parois traversantes, chaque paroi traversante s'étendant entre la paroi d'intrados et la paroi d'extrados. Chaque paroi interne délimitée par deux parois traversantes peut définir une structure interne en forme générale de H. Ainsi, dans ces modes de réalisation, l'aube comprend une structure interne en forme générale de double H, les barres latérales étant les parois traversantes. Il est possible, de manière analogue, d'envisager une structure interne en forme générale de triple H, ou encore quadruple ou davantage, avec autant de parois internes et de parois traversantes que nécessaire. Deux parois traversantes successives, si elles ne sont pas reliées par la première ou la deuxième paroi interne, peuvent être séparées par la cavité interne traversante précédemment mentionnée.

Dans certains modes de réalisation, la paroi d'intrados présente au moins un orifice, de préférence une pluralité d'orifices, reliant la cavité interne traversante à l'extérieur de la pale. Cet orifice peut faire office, éventuellement en combinaison avec d'autres orifices similaires ou différents, de sortie d'air pour la cavité interne traversante. L'orifice permet de décharger, le long de la paroi d'intrados, l'air ayant circulé dans la cavité interne traversante. Il se forme ainsi une couche protectrice de refroidissement par un film fluide, plus connu sous l'appellation anglaise *« film-cooling »,* qui contribue à diminuer non seulement la température de la paroi d'intrados mais aussi l'échauffement de l'air de refroidissement dans les cavités, ce qui s'avère particulièrement avantageux lorsque la cavité d'intrados est située du côté du bord de fuite par rapport à la cavité interne traversante. Optionnellement, l'orifice peut être dirigé vers le bord de fuite, ce qui améliore la régularité du flux d'air et renforce la couche protectrice.

Dans certains modes de réalisation, l'aube comprend un deuxième circuit de refroidissement interne identique au circuit de refroidissement interne, notamment dans laquelle la première paroi interne du premier circuit de refroidissement interne est confondue avec la deuxième paroi interne du deuxième circuit de refroidissement interne.

Par « identique », on comprend que le deuxième circuit de refroidissement interne peut comprendre au moins une cavité d'intrados s'étendant radialement le long de la paroi d'intrados et d'une première paroi interne agencée entre la paroi d'intrados et la paroi d'extrados, au moins une cavité d'extrados s'étendant radialement le long de la paroi d'extrados et d'une deuxième paroi interne, agencée entre la paroi d'intrados et la paroi d'extrados, le deuxième circuit de refroidissement pouvant comporter en outre au moins une cavité interne traversante définie entre deux parois traversantes s'étendant chacune entre la paroi d'intrados et la paroi d'extrados, à distance du bord d'attaque et du bord de fuite, la cavité interne traversante s'étendant radialement le long de la paroi d'intrados et de la paroi d'extrados, dans laquelle la cavité d'intrados, la cavité d'extrados et la cavité interne traversante sont fluidiquement connectées en série. Optionnellement, le deuxième circuit de refroidissement interne peut avoir tout ou partie des autres caractéristiques détaillées à propos du premier circuit de refroidissement interne.

Par ailleurs, cette configuration peut être prévue de manière récurrente : ainsi, certains modes de réalisation comprennent un troisième circuit de refroidissement interne identique au deuxième circuit de refroidissement interne, notamment dans laquelle la première paroi interne du deuxième circuit de refroidissement interne est confondue avec la deuxième paroi interne du troisième circuit de refroidissement interne. Ainsi de suite, plusieurs autres circuits de refroidissement internes peuvent être prévus selon le même schéma.

Dans certains modes de réalisation, l'aube comprend une baignoire à son extrémité radialement externe, et le premier circuit de refroidissement interne comprend une cavité d'extrados auxiliaire s'étendant radialement le long de la paroi d'extrados et configurée pour alimenter une cavité de refroidissement de la baignoire, généralement disposée sous la baignoire. Une baignoire est une cavité située dans la tête de l'aube, c'est-à-dire à son extrémité radialement externe, ouverte en direction de ladite extrémité et délimitée par une paroi de fond et un rebord, ledit rebord s'étendant entre le bord d'attaque et le bord de fuite. La cavité de refroidissement de la baignoire vise à améliorer le refroidissement en tête de pale, qui est un endroit traditionnellement chaud de l'aube en fonctionnement, à la durée de vie limitée et difficile à refroidir.

Dans certains modes de réalisation, la pale comprend un circuit de refroidissement de bord d'attaque comprenant une cavité amont s'étendant radialement le long de la paroi d'intrados et de la paroi d'extrados et adjacente au bord d'attaque, et une première cavité d'alimentation reliée fluidiquement à la cavité amont pour son alimentation en air de refroidissement. Grâce au fait que l'alimentation de la cavité amont est indirecte, via la première cavité d'alimentation, de l'air encore relativement frais, ayant peu travaillé, peut être fourni jusqu'à l'extrémité radialement extérieure de la cavité amont, ce qui améliore le refroidissement au niveau du bord d'attaque en tête de pale. La connexion fluidique entre la cavité amont et la première cavité d'alimentation peut être réalisée par un dispositif d'impact. Un tel dispositif d'impact peut comprendre une pluralité de canaux. Ces canaux peuvent être de section faible par rapport à la taille de la cavité et/ou disposés sensiblement radialement. Ces canaux peuvent être configurés pour accélérer l'air qui y passe, de façon à former un jet qui impacte la paroi en regard, ici la paroi de la cavité amont, et à améliorer ainsi localement les échanges thermiques.

Dans certains modes de réalisation, la pale comprend un circuit de refroidissement de bord de fuite comprenant une cavité aval s'étendant radialement le long de la paroi d'intrados et de la paroi d'extrados et adjacente au bord de fuite, et une deuxième cavité d'alimentation reliée fluidiquement à la cavité aval pour son alimentation en air de refroidissement. Grâce au fait que l'alimentation de la cavité aval est indirecte, via la deuxième cavité d'alimentation, de l'air encore relativement frais, ayant peu travaillé, peut être fourni jusqu'à l'extrémité radialement extérieure de la cavité aval, ce qui améliore le refroidissement au niveau du bord de fuite en tête de pale. La connexion fluidique entre la cavité aval et la deuxième cavité d'alimentation peut être réalisée par une pluralité de trous prévus sur substantiellement toute la longueur, dans la direction radiale, d'une paroi séparant la cavité aval de la deuxième cavité d'alimentation. Une telle pluralité de trous est parfois appelée « calibrage ».

Le présent exposé concerne par ailleurs une aube pour turbine, comprenant un pied d'aube définissant une extrémité radialement interne de l'aube et une pale s'étendant radialement vers l'extérieur à partir du pied d'aube et présentant une paroi d'intrados et une paroi d'extrados raccordée à la paroi d'intrados en un bord d'attaque et un bord de fuite de la pale, la pale comprenant au moins un premier circuit de refroidissement interne comportant au moins une première paroi traversante, une deuxième paroi traversante, une troisième paroi traversante et une quatrième paroi traversante, lesdites parois traversantes s'étendant chacune entre la paroi d'intrados et la paroi d'extrados, à distance du bord d'attaque et du bord de fuite, au moins une paroi interne agencée entre la paroi d'intrados et la paroi d'extrados et connectée à la deuxième paroi traversante et à la troisième paroi traversante, de façon à définir une première cavité interne traversante s'étendant radialement le long de la paroi d'intrados et de la paroi d'extrados, entre la première paroi traversante et la deuxième paroi traversante, une cavité d'intrados s'étendant radialement le long de la paroi d'intrados, de la paroi interne et des deuxième et troisième parois traversantes, une cavité d'extrados s'étendant radialement le long de la paroi d'extrados, de la paroi interne et des deuxième et troisième parois traversantes, et une deuxième cavité interne traversante s'étendant radialement le long de la paroi d'intrados et de la paroi d'extrados, entre la troisième paroi traversante et la quatrième paroi traversante. Une telle aube peut avoir tout ou partie des caractéristiques précédemment décrites. Une telle aube est décrite à des fins d'illustration et peut ne pas être conforme à l'invention.

Le présent exposé concerne aussi une turbomachine comprenant une aube telle que précédemment décrite. Le terme « turbomachine » désigne l'ensemble des appareils à turbine à gaz produisant une énergie motrice, parmi lesquels on distingue notamment les turboréacteurs fournissant une poussée nécessaire à la propulsion par réaction à l'éjection à grande vitesse de gaz chauds, et les turbomoteurs dans lesquels l'énergie motrice est fournie par la rotation d'un arbre moteur. Par exemple, des turbomoteurs sont utilisés comme moteur pour des hélicoptères, des navires, des trains, ou encore comme moteur industriel. Les turbopropulseurs (turbomoteur entraînant une hélice) sont également des turbomoteurs utilisés comme moteur d'avion.

### BRÈVE DESCRIPTION DES DESSINS

L'invention et ses avantages seront mieux compris à la lecture de la description détaillée qui suit, de modes de réalisation de l'invention donnés à titre d'exemples non limitatifs. Cette description se réfère aux dessins annexés, sur lesquels :
- la figure 1 représente, en perspective, une aube pour turbine selon un premier mode de réalisation ;
- la figure 2 représente l'aube selon le premier mode de réalisation en section selon le plan II-II de la figure 1 ;
- la figure 3 représente l'aube selon le premier mode de réalisation en section selon le plan III-III de la figure 1 ;
- la figure 4 représente l'aube selon le premier mode de réalisation en section selon le plan IV-IV de la figure 1 ;
- la figure 5 représente l'aube selon le premier mode de réalisation en section selon le plan V-V de la figure 1 ;
- la figure 6 représente l'aube selon le premier mode de réalisation en section selon le plan VI-VI de la figure 1 ;
- la figure 7 est un schéma synthétisant l'écoulement d'un fluide de refroidissement à l'intérieur de l'aube selon le premier mode de réalisation ;
- la figure 8 représente schématiquement les déformations de l'aube selon le premier mode de réalisation, en cours d'utilisation, en section selon le plan III-III de la figure 1 ;
- la figure 9 représente l'aube selon le premier mode de réalisation en section selon le plan IX-IX de la figure 1 ;
- la figure 10 est un schéma synthétisant l'écoulement d'un fluide de refroidissement à l'intérieur d'une aube selon un deuxième mode de réalisation, non conforme à l'invention et décrit à des fins d'illustration ;
- la figure 11 est un schéma synthétisant l'écoulement d'un fluide de refroidissement à l'intérieur d'une aube selon un troisième mode de réalisation ;
- la figure 12 est un schéma synthétisant l'écoulement d'un fluide de refroidissement à l'intérieur d'une aube selon un quatrième mode de réalisation ;
- la figure 13 est une vue schématique partielle en coupe d'une turbomachine incorporant l'aube selon l'un des modes de réalisation.

### DESCRIPTION DÉTAILLÉE DE L'INVENTION

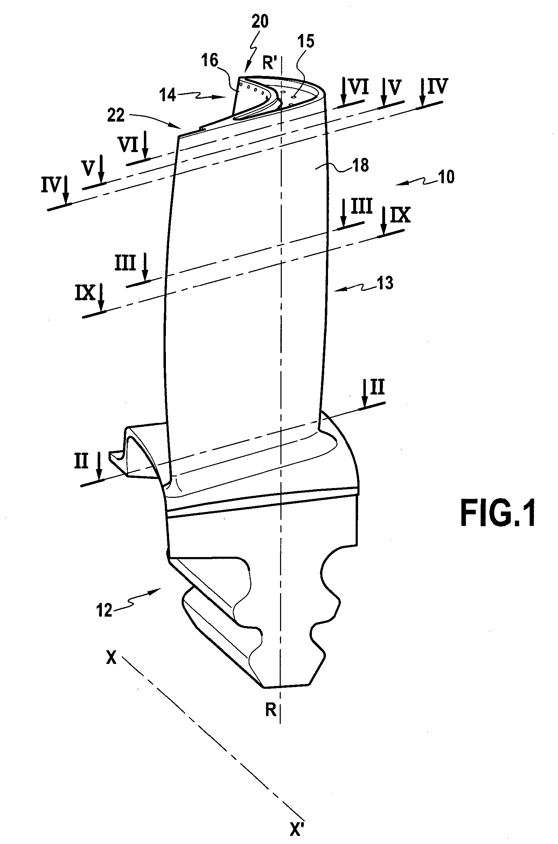

Sur la figure 1 est visible, en perspective, un exemple d'une aube 10 de rotor creuse pour une turbine à gaz, selon un premier mode de réalisation. De l'air de refroidissement (non représenté) s'écoule à l'intérieur de l'aube depuis le bas du pied 12 de l'aube dans la pale 13, le long de la direction longitudinale R-R' de la pale 13 (direction verticale sur la figure et direction radiale par rapport à l'axe X-X' de rotation du rotor), vers la tête 14 de l'aube (en haut sur la figure 1), puis cet air de refroidissement s'échappe par une sortie pour rejoindre le flux de gaz principal. Le pied 12 forme l'extrémité radialement interne de l'aube 10 et la tête 14 forme l'extrémité radialement externe de l'aube 10.

En particulier, cet air de refroidissement circule dans un circuit de refroidissement interne qui est situé à l'intérieur de la pale 13 et dont certaines branches aboutissent à la tête 14 de l'aube au niveau de perçages débouchants 15 prévus dans une baignoire.

Le corps de la pale est profilé de sorte qu'il définit une paroi d'intrados 16 et une paroi d'extrados 18. La paroi d'intrados 16 présente une forme générale concave et se présente la première face au flux de gaz chauds, c'est-à-dire du côté pression des gaz, par sa face extérieure, tournée vers l'amont. La paroi d'extrados 18 est convexe et se présente par la suite au flux de gaz chauds, c'est-à-dire du côté aspiration des gaz, le long de sa face extérieure, tournée vers aval.

Les parois d'intrados 16 et d'extrados 18 se rejoignent à l'emplacement du bord d'attaque 20 et à l'emplacement du bord de fuite 22 qui s'étendent radialement entre la tête 14 de l'aube et le haut du pied 12 de l'aube.

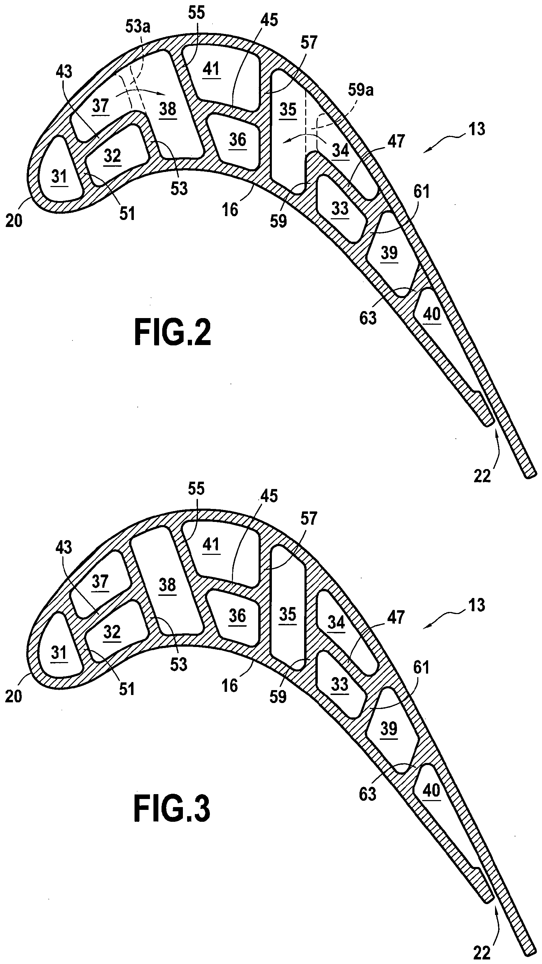

Comme indiqué précédemment, la pale 13 comprend un premier circuit de refroidissement interne qui va être détaillé en référence aux figures 2 à 9. En particulier, les figures 2 à 6 présentent des sections successives de l'extrémité radialement interne de la pale 13 à son extrémité radialement externe.

La figure 3 représente la pale 13 en section selon un plan transversal. Le plan III-III est situé de préférence entre 10% et 90% de la dimension de la pale 13 dans la direction longitudinale, de préférence entre 20% et 80%, de préférence encore entre 25% et 75%.

Comme illustré sur la figure 3, l'aube comprend des cavités 31-41 séparées les unes des autres par des parois s'étendant radialement. Plus particulièrement, l'aube 10 comprend des parois traversantes s'étendant chacune entre la paroi d'intrados 16 et la paroi d'extrados 18, à distance du bord d'attaque 20 et du bord de fuite 22. Dans ce mode de réalisation, l'aube comprend sept parois traversantes 51, 53, 55, 57, 59, 61, 63. Comme illustré, les parois traversantes peuvent être sensiblement rectilignes en section transversale.

Par ailleurs, l'aube 10 comprend des parois internes agencée chacune entre la paroi d'intrados 16 et la paroi d'extrados 18 et à distance de la paroi d'intrados 16 et de la paroi d'extrados 18, en l'occurrence trois parois internes 43, 45, 47. Comme illustré, les parois internes peuvent être sensiblement rectilignes en section transversale.

Les parois internes relient deux à deux les parois traversantes de façon à former des structures en forme générale de H. Plus précisément, dans ce mode de réalisation, la paroi interne 43 relie les parois traversantes 51 et 53, la paroi interne 45 relie les parois traversantes 55 et 57, et la paroi interne 47 relie les parois traversantes 59 et 61, ce par quoi trois structures en forme générale de H sont formées, lesdites trois structures n'étant reliées les unes aux autres que par les parois d'intrados et d'extrados 16, 18.

Comme illustré sur la figure 3, les structures en forme générale de H précitées sont séparées, deux à deux, par une cavité interne traversante. Ainsi, dans ce mode de réalisation, l'aube 10 comprend deux cavités internes traversantes 35, 38. La cavité interne traversante 35 (respectivement la cavité interne traversante 38) est définie entre deux parois traversantes 57, 59 (respectivement deux parois traversantes 53, 55) appartenant à des structures en H distinctes et s'étend radialement le long de la paroi d'intrados 16 et de la paroi d'extrados 18.

Ainsi, la paroi d'intrados 16, la paroi d'extrados 18, les parois internes 43, 45, 47 et les parois traversantes 51, 53, 55, 57, 59, 61, 63 définissent une pluralité de cavités dont les caractéristiques et le rôle vont maintenant être détaillées.

Une cavité amont 31 s'étend radialement le long de la paroi d'intrados 16 et de la paroi d'extrados 18 et est délimitée par une paroi traversante 51. La cavité amont 31 est adjacente au bord d'attaque 20.

Une première cavité d'alimentation 32 est définie entre la paroi d'intrados 16, la paroi traversante 51, la paroi interne 43 et la paroi traversante 53. Dans la mesure où elle s'étend radialement le long de la paroi d'intrados 16 et d'une paroi interne, la première cavité d'alimentation 32 peut également être appelée cavité d'intrados. La première cavité d'alimentation 32 est reliée fluidiquement à la cavité amont 31 pour son alimentation en air de refroidissement, par exemple par un dispositif d'impact tel que précédemment défini. La première cavité d'alimentation 32 peut être, quant à elle, alimentée en air de refroidissement via une section d'entrée d'air ménagée dans le pied d'aube 12, par exemple un canal.

La cavité amont 31 et la première cavité d'alimentation 32 forment un circuit de refroidissement de bord d'attaque assurant le refroidissement de la pale 13 au niveau de son bord d'attaque 20.

De manière similaire, une cavité aval 40 s'étend radialement le long de la paroi d'intrados 16 et de la paroi d'extrados 18 et est délimitée par une paroi traversante 63. La cavité aval 40 est adjacente au bord de fuite 22.

Une deuxième cavité d'alimentation 39 est définie entre la paroi d'intrados 16, la paroi traversante 61, la paroi d'extrados 18 et la paroi traversante 63. La deuxième cavité d'alimentation 39 est reliée fluidiquement à la cavité aval 40 pour son alimentation en air de refroidissement, par exemple par un calibrage tel que précédemment défini. La deuxième cavité d'alimentation 39 peut être, quant à elle, alimentée en air de refroidissement via une section d'entrée d'air ménagée dans le pied d'aube 12, par exemple un canal.

La cavité aval 40 et la deuxième cavité d'alimentation 39 forment un circuit de refroidissement de bord de fuite assurant le refroidissement de la pale 13 au niveau de son bord de fuite 22.

La pale 13 comprend en outre un premier circuit de refroidissement interne comportant au moins une cavité d'intrados, en l'occurrence qui peut être sélectionnée parmi deux cavités d'intrados 33, 36. La cavité d'intrados 33 (resp. la cavité d'intrados 36) s'étend radialement le long de la paroi d'intrados 16 et d'une paroi interne 47 (resp. une paroi interne 45) agencée entre la paroi d'intrados 16 et la paroi d'extrados 18. Ladite paroi interne 47 (resp. la paroi interne 45) définissant la cavité d'intrados 33 (resp. la cavité d'intrados 36) peut être qualifiée de première paroi interne. Par ailleurs, la cavité d'intrados 33 (resp. la cavité d'intrados 36) est délimitée par les parois traversantes 59, 61 (resp. les parois traversantes 55, 57), la première paroi interne 47 (resp. la première paroi interne 45) étant connectée auxdites parois traversantes 59, 61 (resp. auxdites parois traversantes 55, 57).

Le premier circuit de refroidissement interne comprend par ailleurs au moins une cavité d'extrados, en l'occurrence qui peut être sélectionnée parmi trois cavités d'extrados 37, 41, 34. La cavité d'extrados 37 (resp. la cavité d'extrados 41, resp. la cavité d'extrados 34) s'étend radialement le long de la paroi d'extrados 18 et d'une paroi interne 43 (resp. une paroi interne 45, resp. une paroi interne 47) agencée entre la paroi d'intrados 16 et la paroi d'extrados 18. Ladite paroi interne 43 (resp. la paroi interne 45, resp. la paroi interne 47) définissant la cavité d'extrados 37 (resp. la cavité d'extrados 41, resp. la cavité d'extrados 34) peut être qualifiée de deuxième paroi interne. La deuxième paroi interne peut être distincte ou confondue avec la première paroi interne précédemment mentionnée. Dans le cas où la première paroi interne et la deuxième paroi interne sont confondues, les cavités d'intrados et d'extrados correspondantes peuvent être situées de part et d'autre de ladite première et deuxième paroi interne. Par exemple, il peut s'agir de la cavité d'intrados 33, de la cavité d'extrados 34 et de la paroi interne 47. Inversement, dans le cas où les première et deuxième parois internes sont distinctes, les cavités d'intrados et d'extrados correspondantes ne sont pas situées de part et d'autre d'une même paroi interne. Cet exemple peut être illustré par la cavité d'intrados 36 définie par la première paroi interne 45 et la cavité d'extrados 37 définie par la deuxième paroi interne 43.

Par ailleurs, la cavité d'extrados 37 (resp. la cavité d'extrados 41, resp. la cavité d'extrados 34) est délimitée par les parois traversantes 51, 53 (resp. les parois traversantes 55, 57, resp. les parois traversantes 59, 61), la deuxième paroi interne 43 (resp. la deuxième paroi interne 45, resp. la deuxième paroi interne 47) étant connectée auxdites parois traversantes 51, 53 (resp. auxdites parois traversantes 55, 57, resp. auxdites parois traversantes 59, 61).

De plus, le premier circuit de refroidissement comporte en outre au moins une cavité interne traversante, en l'occurrence qui peut être sélectionnée parmi trois cavités internes traversantes 38, 35, 39. La cavité interne traversante 38 (resp. 35, resp. 39) est définie entre deux parois traversantes 51, 53 (resp. 55, 57, resp. 59, 61) et s'étend radialement le long de la paroi d'intrados 16 et de la paroi d'extrados 18.

Ainsi, dans ce premier mode de réalisation, il peut être identifié un premier circuit de refroidissement interne comportant au moins une cavité d'intrados 33 s'étendant radialement le long de la paroi d'intrados 16 et d'une première paroi interne 47 agencée entre la paroi d'intrados 16 et la paroi d'extrados 18, au moins une cavité d'extrados 34 s'étendant radialement le long de la paroi d'extrados 18 et d'une deuxième paroi interne 47 agencée entre la paroi d'intrados 16 et la paroi d'extrados 18, et en l'espèce confondue avec la première paroi interne, le premier circuit de refroidissement comportant en outre au moins une cavité interne traversante 35 définie entre deux parois traversantes 57, 59 s'étendant chacune entre la paroi d'intrados 16 et la paroi d'extrados 18, à distance du bord d'attaque 20 et du bord de fuite 22, la cavité interne traversante 35 s'étendant radialement le long de la paroi d'intrados 16 et de la paroi d'extrados 18. La première paroi interne 47 (et par conséquent la deuxième paroi interne) est connectée à une desdites parois traversantes, à savoir la paroi traversante 59.

Dans ce mode de réalisation, la pale 13 comprend un autre premier circuit de refroidissement interne comportant au moins une cavité d'intrados 36 s'étendant radialement le long de la paroi d'intrados 16 et d'une première paroi interne 45 agencée entre la paroi d'intrados 16 et la paroi d'extrados 18, au moins une cavité d'extrados 37 s'étendant radialement le long de la paroi d'extrados 18 et d'une deuxième paroi interne 43, agencée entre la paroi d'intrados 16 et la paroi d'extrados 18, le premier circuit de refroidissement comportant en outre au moins une cavité interne traversante 38 définie entre deux parois traversantes 53, 55 s'étendant chacune entre la paroi d'intrados 16 et la paroi d'extrados 18, à distance du bord d'attaque 20 et du bord de fuite 22, la cavité interne traversante 38 s'étendant radialement le long de la paroi d'intrados 16 et de la paroi d'extrados 18. La première paroi interne 45 et la deuxième paroi interne 43 sont chacune connectée à une desdites parois traversantes, à savoir respectivement connectées aux parois traversantes 53, 55.

La figure 2 illustre une section de la pale 13 radialement davantage vers l'intérieur que la section de la figure 3 (voir figure 1). Comme illustré sur la figure 2, en partie radialement interne de la pale, un passage 53a est ménagé dans la paroi traversante 53 de façon à connecter fluidiquement la cavité d'extrados 37 à la cavité interne traversante 38. Par ailleurs, un passage 59a est ménagé dans la paroi traversante 59 de façon à connecter fluidiquement la cavité d'extrados 34 à la cavité interne traversante 35. Ainsi, la cavité d'extrados 34 (resp. la cavité d'extrados 37) et la cavité interne traversante 35 (resp. la cavité interne traversante 38) sont fluidiquement connectées en série, comme illustré par les flèches traduisant le passage de fluide des cavités 34 à 35 (resp. des cavités 37 à 38).

Plus généralement, un passage 59a (resp. un passage 53a) est ménagé dans une partie radialement interne de la pale 13 de façon à relier fluidiquement la cavité d'extrados 34 (resp. la cavité d'extrados 37) et la cavité interne traversante 35 (resp. la cavité interne traversante 38).

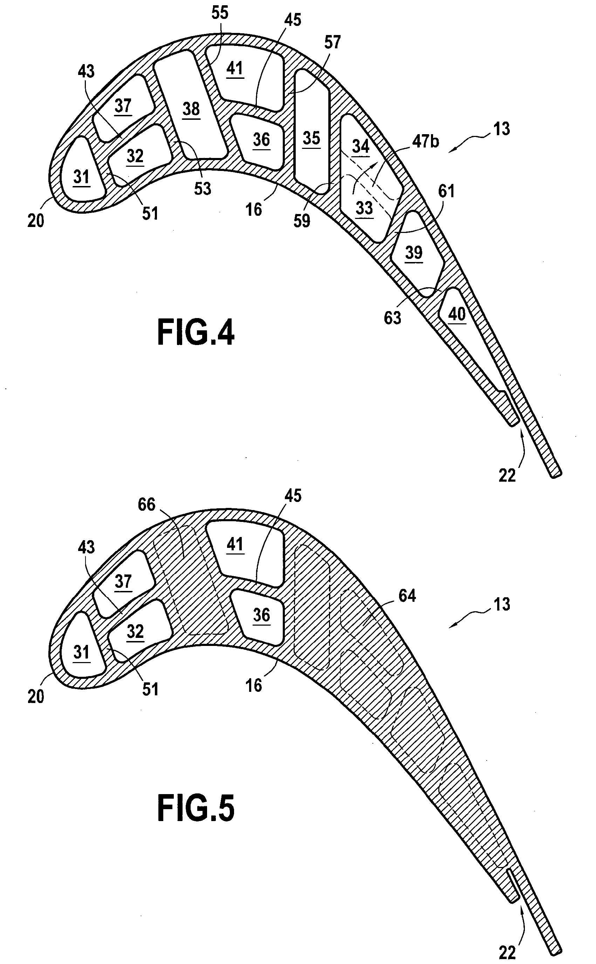

La figure 4 illustre une section de la pale 13 radialement davantage vers l'extérieur que la section de la figure 3 (voir figure 1). Comme illustré sur la figure 4, en partie radialement externe de la pale, un passage 47b est ménagé dans la paroi interne 47 de façon à connecter fluidiquement la cavité d'intrados 33 à la cavité d'extrados 34. Ainsi, la cavité d'intrados 33 et la cavité d'extrados 34 sont fluidiquement connectées en série, comme illustré par la flèche traduisant le passage de fluide entre lesdites cavités. Plus généralement, un passage 47b est ménagé dans une partie radialement externe de la pale 13 de façon à relier fluidiquement la cavité d'intrados 33 et la cavité d'extrados 34.

Au vu de ce qui précède, la cavité d'intrados 33, la cavité d'extrados 34 et la cavité interne traversante 35 sont fluidiquement connectées en série, dans cet ordre.

La figure 5 illustre une section de la pale 13 radialement davantage vers l'extérieur que la section de la figure 4 (voir figure 1). Comme on peut le voir sur la figure 5, une paroi de fond 64 obture l'extrémité radialement externe de la cavité d'intrados 33, de la cavité d'extrados 34, de la cavité interne traversante 35, de la deuxième cavité d'alimentation 39 et de la cavité aval 40. Par ailleurs, une paroi de fond 66 obture l'extrémité radialement externe de la cavité interne traversante 38. En revanche, la cavité amont 31, la première cavité d'alimentation 32, la cavité d'intrados 36, la cavité d'extrados 37 et la cavité d'extrados 41 se prolongent radialement au-delà des parois de fond 64, 66.

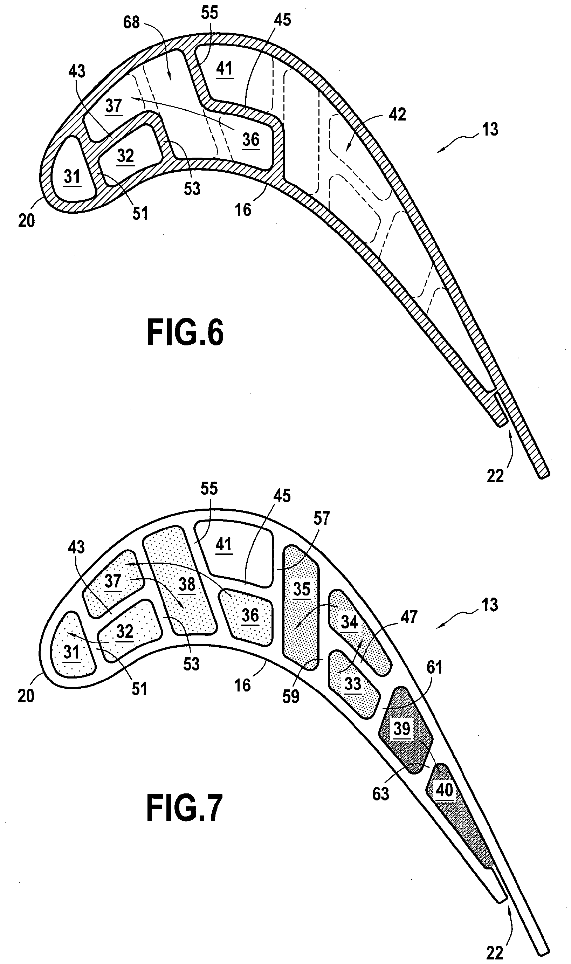

La figure 6 illustre une section de la pale 13 radialement davantage vers l'extérieur que la section de la figure 5 (voir figure 1). Comme on peut le voir sur la figure 6, un passage 68 relie fluidiquement la cavité d'intrados 36 à la cavité d'extrados 37 sans passer par la cavité interne traversante 38, grâce à la paroi de fond 66. Ainsi, la cavité d'intrados 36 et la cavité d'extrados 37 sont fluidiquement connectées en série, comme illustré par la flèche traduisant le passage de fluide entre lesdites cavités. En l'occurrence, le passage 68 surplombe la cavité interne traversante 38. Plus généralement, un passage 68 est ménagé dans une partie radialement externe de la pale 13 de façon à relier fluidiquement la cavité d'intrados 36 et la cavité d'extrados 37.

Au vu de ce qui précède, la cavité d'intrados 36, la cavité d'extrados 37 et la cavité interne traversante 38 sont fluidiquement connectées en série, dans cet ordre.

Par ailleurs, la cavité d'extrados 41 peut faire office de cavité d'extrados auxiliaire pour l'alimentation d'une cavité de refroidissement 42 de la baignoire, positionnée sous la baignoire dans une direction radiale. Le positionnement de la cavité d'extrados auxiliaire 41 du côté de l'extrados, à distance du bord d'attaque et du bord de fuite, de préférence dans une position intermédiaire entre le bord d'attaque 20 et le bord de fuite 22, permet de limiter l'échauffement de l'air de refroidissement lors de son écoulement dans la cavité d'extrados auxiliaire 41 et de délivrer à la cavité de refroidissement 42 de la baignoire un fluide aussi froid que possible, pour un refroidissement efficace de la tête 14. Du fait de la paroi de fond 64, la cavité de refroidissement 42 est alimentée uniquement par la cavité d'extrados auxiliaire 41 et séparée fluidiquement de la cavité d'intrados 33, de la cavité d'extrados 34, de la cavité interne traversante 35, de la deuxième cavité d'alimentation 39 et de la cavité aval 40.

La figure 7 schématise, à partir de la section de la figure 3, la circulation de l'air de refroidissement dans le mode de réalisation précédemment décrit. Les cavités reliées fluidiquement en série entre elles ont été représentées avec des densités de points identiques. Les flèches indiquent un sens possible de circulation du fluide, ce sens étant déterminé conformément à ce qui suit.

Dans le présent mode de réalisation, des sections d'entrée d'air peuvent être prévues dans le pied d'aube 12 pour l'alimentation des cavités en air de refroidissement. Par exemple, une section d'entrée d'air peut être prévue pour au moins l'une ou chacune des cavités suivantes : la première cavité d'alimentation 32, la cavité d'intrados 33, la cavité d'intrados 36, la deuxième cavité d'alimentation 39, la cavité d'extrados auxiliaire 41.

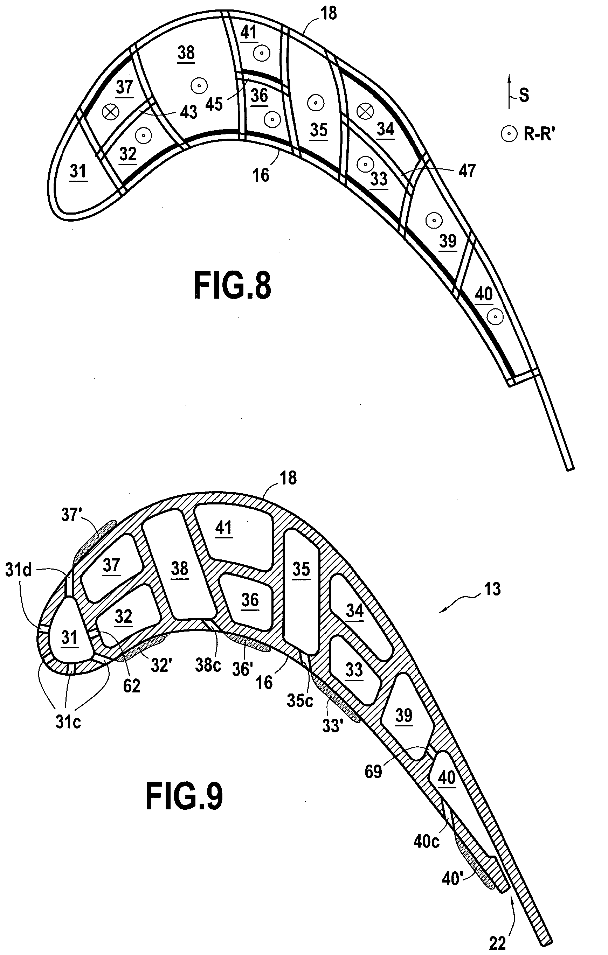

Le sens de circulation du fluide de refroidissement obtenu dans ces conditions est représenté sur la figure 8. Comme il ressort de la figure 8, le fluide de refroidissement circule du pied 12 vers la tête 14 dans les cavités d'alimentation 32, 39, dans les cavités d'intrados 33, 36, dans les cavités internes traversantes 35, 38 et dans la cavité aval 40, et de la tête 14 vers le pied 12 dans les cavités d'extrados 34 et 37.

Lorsque le rotor sur lequel l'aube 10 est montée tourne dans la direction S représentée sur la figure 8, l'air de refroidissement est de plus soumis à la force de Coriolis. Compte tenu du sens de circulation précédemment décrit, dans les cavités d'alimentation 32, 39, dans les cavités d'intrados 33, 36, dans les cavités internes traversantes 35, 38 et dans la cavité aval 40, l'air est plaqué contre le côté intrados desdites cavités, ce qui est illustré en traits forts sur la figure 8. En revanche, dans les cavités d'extrados 34, 37, l'air est plaqué contre le côté extrados desdites cavités.

Grâce à ce refroidissement et à l'agencement des parois traversantes et parois internes, les contraintes thermomécaniques accumulées dans la pale 13 en fonctionnement sont largement diminuées. En effet, la figure 8 illustre également, de manière schématique, les déformations subies par la structure de la pale 13. Comme il ressort de la figure 8, les parois d'intrados et d'extrados 16, 18 se déforment davantage que les parois internes 43, 45, 47, du fait de leur température plus élevée en fonctionnement. La présence de cavités internes traversantes telles que les cavités 35, 38 - et dans une certaine mesure la deuxième cavité d'alimentation 39 qui répond aussi à la définition d'une cavité interne traversante au sens du présent exposé - permet d'accommoder cette dilatation différentielle et de minimiser les contraintes au sein de la pale 13, comme on peut le déduire de la courbure prise par les parois traversantes.

En outre, la présence et la déformation relativement faible des parois internes 43, 45, 47 permettent de soutenir convenablement les parois de fond 64, 66, qui s'étendent transversalement. En effet, étant à une température inférieure aux parois d'intrados et d'extrados 16, 18, les parois internes 43, 45, 47 présentent, toutes choses égales par ailleurs, de meilleures propriétés mécaniques, sont plus raides et supportent mieux les contraintes qui résultent de la force centrifuge liée à la rotation de la turbine. Cette récupération des efforts par les parois internes 43, 45, 47 soulage également les parois d'intrados et d'extrados 16, 18, qui voient par conséquent leur durée de vie augmentée.

La figure 9 est sensiblement identique à la figure 3, si ce n'est que la section de la pale 13 considérée (plan IX-IX sur la figure 1) est choisie de manière à montrer la présence d'orifices permettant la circulation de l'air au sein de la pale 13 et vers l'extérieur de la pale 13.

Un orifice 62, de préférence une pluralité d'orifices, est ménagé dans la paroi traversante 51, entre la première cavité d'alimentation 32 et la cavité amont 31. L'orifice 62 permet d'alimenter la cavité amont 31 en air de refroidissement de manière indirecte, comme exposé précédemment.

Un orifice 69, de préférence une pluralité d'orifices, est ménagé dans la paroi traversante 63, entre la deuxième cavité d'alimentation 39 et la cavité aval 40. L'orifice 69 permet d'alimenter la cavité aval 40 en air de refroidissement de manière indirecte, comme exposé précédemment.

Par ailleurs, des orifices d'évacuation tels que les orifices 31c, 35c, 38c, 40c sont prévus dans la paroi d'intrados 16, débouchant respectivement sur la cavité amont 31, les cavités internes traversantes 35, 38 et la cavité aval 40. Les orifices d'évacuation 31c, 35c, 38c, 40c peuvent être configurés pour créer un film fluide protecteur à la surface externe de la pale 13, en aval desdits orifices. A cette fin, les orifices 31c, 35c, 38c, 40c peuvent être orientés vers le bord de fuite 22. En l'espèce, lesdits orifices créent respectivement des films de protection 32', 33', 36' et 40' protégeant respectivement les cavités 32, 33, 36, 40.

De la même façon, des orifices d'évacuation 31d peuvent être prévus dans la paroi d'extrados 18, notamment au niveau du bord d'attaque. En l'occurrence, les orifices d'évacuation 31d relient la cavité amont 31 à l'extérieur de la pale 13 et permettent la création d'un film fluide protecteur 37' visant à protéger la cavité d'extrados 37.

Comme il ressort de la figure 9, les cavités et les orifices d'évacuation sont prévus de sorte qu'un circuit se protège lui-même. Par exemple, l'air entrant par la cavité d'intrados 36 circule vers la cavité d'extrados 37 puis la cavité interne traversante 38, puis est évacué par l'orifice d'évacuation 38c où il contribue à créer le film fluide protecteur 36' qui protège la cavité d'intrados 36. Il est avantageux, pour ce faire, que l'air circule globalement à contre-courant dans les cavités, c'est-à-dire du bord de fuite vers le bord d'attaque. C'est le cas dans cet exemple, puisque la cavité de sortie d'air, à savoir la cavité interne traversante 38, est située en amont de la cavité d'entrée d'air, à savoir la cavité d'intrados 36. Il en va de même du circuit de refroidissement de bord d'attaque et du circuit de refroidissement interne formé par les cavités 33-35.

L'aube 10 peut être fabriquée selon le procédé connu en soi de fonderie à cire perdue. Pour ce faire, des noyaux sont préalablement fabriqués, lesquels noyaux occupent l'espace devant être ménagé pour les cavités lors de la réalisation du moule.

Les noyaux correspondant aux cavités 33-35 d'une part, 36-38 d'autre part peuvent être fabriqués selon tout procédé convenant, par exemple par moulage avec utilisation éventuelle d'inserts dans le moule, ou par fabrication additive.

Le maintien des noyaux lors de la fabrication du moule peut être réalisé de manière connue de l'homme du métier. Les noyaux correspondant aux cavités 33-35 d'une part, 36-38 d'autre part, peuvent être soutenus par deux supports situés dans le pied 12. Afin d'éviter un nombre excessif de supports et simplifier l'agencement du pied 12, il est possible de ne prévoir qu'un pied par noyau, le maintien étant complété par un appendice délocalisé. Cet appendice est de préférence prévu pour former, dans l'aube finale, une ouverture qui soit susceptible d'être ensuite rebouchée par une bille brasée.

Après la coulée du métal et la destruction des noyaux, les cavités peuvent subir une opération de dépoussiérage. Pour ce faire, il est possible de prévoir dans la pale un trou de dépoussiérage, par exemple en tête d'aube. Le cas échéant, en vue du dépoussiérage des cavités traversantes 35, 38 respectivement obturées par les parois de fond 64, 66, la forme de la cavité de refroidissement 42 de la baignoire et/ou du passage 68 peut être adaptée pour permettre le passage d'une tige solidaire du noyau et la réalisation du trou de dépoussiérage directement de fonderie, et/ou pour permettre la réalisation dudit trou par usinage après fonderie de la pale. Le trou de dépoussiérage peut, éventuellement, aussi permettre l'évacuation des débris en fonctionnement.

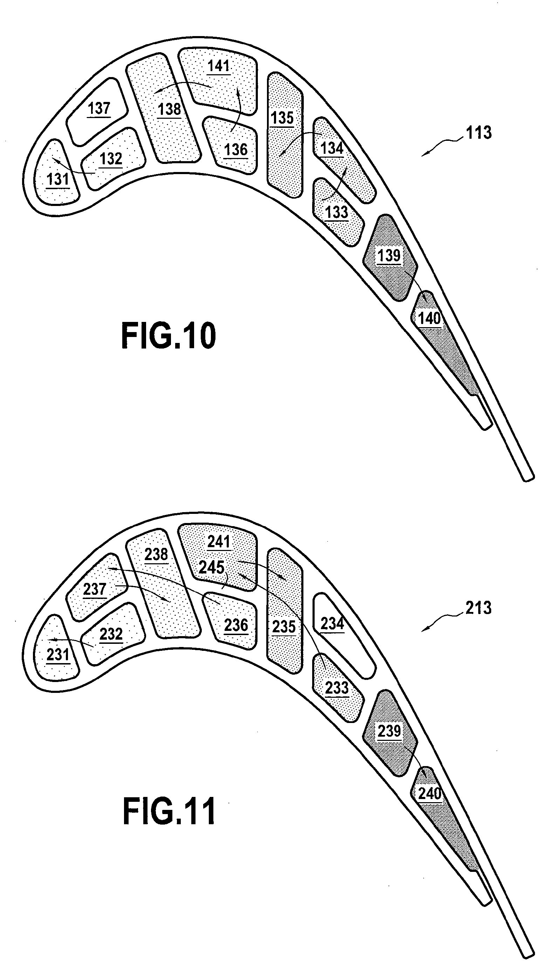

Les figures 10 à 12 présentent une aube pour turbine dans d'autres modes de réalisation. Sur ces figures, les éléments correspondant ou identiques à ceux du premier mode de réalisation recevront le même signe de référence, au chiffre des centaines près, et ne seront pas décrits à nouveau.

Les figures 10 à 12 sont des vues schématiques similaires à celle de la figure 7 et représentées selon les mêmes conventions, décrites ci-dessus.

Dans la pale 113 selon un deuxième mode de réalisation représenté sur la figure 10, non conforme à l'invention et décrit à des fins d'illustration, la cavité 137 est utilisée comme cavité d'extrados auxiliaire. La cavité 141 est utilisée comme cavité d'extrados fluidiquement connectée en série entre la cavité d'intrados 136 et la cavité interne traversante 138. La paroi de fond 66 décrite en relation avec la figure 5 peut être étendue pour obturer la cavité d'intrados 136 et la cavité d'extrados 141, compte tenu du fait qu'il n'est pas nécessaire, dans ce mode de réalisation, de ménager un passage similaire au passage 68 décrit en relation avec la figure 6.

Ainsi, dans ce mode de réalisation, la pale comprend un premier circuit de refroidissement interne comportant la cavité d'intrados 133, la cavité d'extrados 134 et la cavité interne traversante 135, et un deuxième circuit de refroidissement interne comportant la cavité d'intrados 136, la cavité d'extrados 141 et la cavité interne traversante 138. Au sens du présent exposé, les premier et deuxième circuits de refroidissement internes de ce mode de réalisation sont identiques. Par ailleurs, les cavités 131, 132, 139, 140 des circuits de refroidissement de bord d'attaque et de bord de fuite sont inchangées.

Ce mode de réalisation permet de prévoir une cavité de refroidissement de la baignoire plus grande que la cavité de refroidissement 42 précédemment décrite et permet une fabrication similaire des noyaux des circuits de refroidissement interne.

Dans la pale 213 selon un troisième mode de réalisation représenté sur la figure 11, le premier circuit de refroidissement interne formé par les cavités 236-238 est identique au premier circuit de refroidissement interne selon le premier mode de réalisation (cavités 36-38). En revanche, la cavité 234 est utilisée comme cavité d'extrados auxiliaire. La cavité 241 est utilisée comme cavité d'extrados fluidiquement connectée en série entre la cavité d'intrados 233 et la cavité interne traversante 235. Par conséquent, afin de ménager entre la cavité d'intrados 233 et la cavité d'extrados 241 un passage qui ne passe pas par la cavité interne traversante 235 (un passage similaire au passage 68 décrit en relation avec la figure 6), il est nécessaire, par rapport au premier mode de réalisation, de modifier la paroi de fond 64 décrite en relation avec la figure 5 de façon à laisser la cavité d'intrados 233 et la cavité d'extrados auxiliaire 234 se prolonger à travers ladite paroi de fond.

Ainsi, dans ce mode de réalisation, la pale comprend un premier circuit de refroidissement interne comportant la cavité d'intrados 233, la cavité d'extrados 241 et la cavité interne traversante 235, et un deuxième circuit de refroidissement interne comportant la cavité d'intrados 236, la cavité d'extrados 237 et la cavité interne traversante 238. Au sens du présent exposé, les premier et deuxième circuits de refroidissement internes de ce mode de réalisation sont identiques. En outre, la première paroi interne 245 du premier circuit de refroidissement interne est confondue avec la deuxième paroi interne du deuxième circuit de refroidissement interne.

Ce mode de réalisation permet de fusionner la section d'entrée d'air de la cavité d'extrados auxiliaire 234 avec la section d'entrée d'air de la deuxième cavité d'alimentation 239, ce qui facilite l'agencement du pied de pale et sa fabrication.

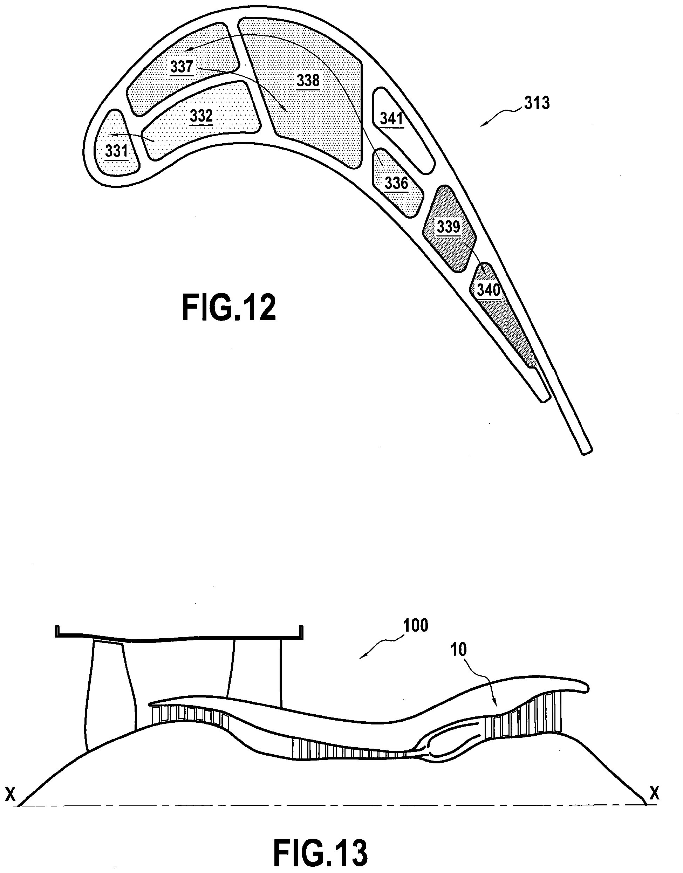

Une pale 313 selon un quatrième mode de réalisation, représenté sur la figure 12, est similaire à la pale 213 selon le troisième mode de réalisation, si ce n'est qu'elle ne comprend qu'un premier circuit de refroidissement interne, formé en l'occurrence par les cavités 336, 337 et 338. Ce mode de réalisation peut être avantageusement mis en oeuvre pour des pales de plus petite taille que celles décrites auparavant. Pour réduire encore la taille de la pale 313, il serait possible d'unifier d'une part la cavité amont 331 avec la première cavité d'alimentation 332, et/ou d'autre part la cavité aval 340 avec la deuxième cavité d'alimentation 339. Tandis que les modes de réalisation précédents ont des parois internes et traversantes configurées pour former une structure en triple H, les parois internes et traversante de l'aube 313 selon le quatrième mode de réalisation forment une structure en double H. Les effets obtenus par une telle structure et décrits au sujet des autres modes de réalisation se transposent *mutatis mutandis.*

L'aube 10 selon l'un quelconque des modes de réalisation décrit peut être une aube mobile de turbine d'une turbomachine 100, comme représenté schématiquement sur la figure 13.

Bien que la présente invention ait été décrite en se référant à des exemples de réalisation spécifiques, des modifications peuvent être apportées à ces exemples sans sortir de la portée générale de l'invention telle que définie par les revendications. Par exemple, bien que l'écoulement du fluide dans les cavités ait été décrit selon un certain sens correspondant à un mode de réalisation préféré, il apparaîtra à l'homme du métier qu'il est possible de modifier la position radiale des passages entre cavités et/ou de disposer autrement les sections d'entrée d'air du pied d'aube de façon à imposer un sens de circulation de fluide de refroidissement différent de celui décrit dans le présent exposé.

En outre, bien que les cavités aient été représentées lisses et vides, il est possible d'y prévoir des perturbateurs d'écoulement afin d'augmenter les échanges thermiques.

De manière générale, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

## Revendications

1. Aube (10) pour turbine, comprenant un pied d'aube (12) définissant une extrémité radialement interne de l'aube et une pale (13, 113, 213) s'étendant radialement vers l'extérieur à partir du pied d'aube (12) et présentant une paroi d'intrados (16) et une paroi d'extrados (18) raccordée à la paroi d'intrados (16) en un bord d'attaque (20) et un bord de fuite (22) de la pale, la pale (13, 113, 213) comprenant au moins un premier circuit de refroidissement interne comportant au moins une cavité d'intrados (33, 36) s'étendant radialement le long de la paroi d'intrados (16) et d'une première paroi interne (47, 45) agencée entre la paroi d'intrados (16) et la paroi d'extrados (18), au moins une cavité d'extrados (34, 37) s'étendant radialement le long de la paroi d'extrados (18) et d'une deuxième paroi interne (47, 43) agencée entre la paroi d'intrados (16) et la paroi d'extrados (18), **caractérisée en ce que** le premier circuit de refroidissement comporte en outre au moins une cavité interne traversante (35, 38) définie entre deux parois traversantes (59, 57, 55, 53) s'étendant chacune entre la paroi d'intrados (16) et la paroi d'extrados (18), la cavité interne traversante (35, 38) s'étendant radialement le long de la paroi d'intrados (16) et de la paroi d'extrados (18), dans laquelle la cavité d'intrados (33, 36), la cavité d'extrados (34, 37) et la cavité interne traversante (35, 38) sont fluidiquement connectées en série, et dans laquelle la cavité d'intrados (36, 233, 236) et la cavité d'extrados (37, 241, 237) sont ménagées de part et d'autre de la cavité interne traversante (38, 235, 238) et un passage (68) relie fluidiquement la cavité d'intrados (37, 241, 237) à la cavité d'extrados (37, 241, 237) sans passer par la cavité interne traversante (38, 235, 238).

2. Aube selon la revendication 1, dans laquelle la cavité d'intrados (33, 36), la cavité d'extrados (34, 37) et la cavité interne traversante (35, 38) sont fluidiquement connectées en série dans cet ordre.

3. Aube selon la revendication 1 ou 2, dans laquelle la première paroi interne (45) est connectée à une première desdites parois traversantes (55, 57) et la deuxième paroi interne (43, 47) est connectée à une deuxième (53, 59) desdites parois traversantes.

4. Aube selon l'une quelconque des revendications 1 à 3, comprenant une troisième paroi traversante (53, 55, 57, 59, 61) connectée à la première paroi interne (45) ou à la deuxième paroi interne (43, 47), le circuit de refroidissement interne comportant une deuxième cavité traversante (38, 35, 39) s'étendant radialement le long de la paroi d'intrados, de la paroi d'extrados et de la troisième paroi traversante (53, 55, 57, 59, 61).

5. Aube selon l'une quelconque des revendications 1 à 4, dans laquelle la cavité d'intrados (36, 233, 236) est ménagée du côté du bord de fuite (22) et la cavité d'extrados (37, 241, 237) du côté du bord d'attaque (20) par rapport à la cavité interne traversante (38, 235, 238).

6. Aube selon l'une quelconque des revendications 1 à 5, dans laquelle la première paroi interne (47, 45) et la deuxième paroi interne (47, 43) sont chacune délimitée par deux parois traversantes (61, 59, 57, 55, 53, 51), chaque paroi traversante (61, 59, 57, 55, 53, 51) s'étendant entre la paroi d'intrados (16) et la paroi d'extrados (18).

7. Aube selon l'une quelconque des revendications 1 à 6, dans laquelle la paroi d'intrados (16) présente au moins un orifice (35c, 38c) reliant la cavité interne traversante (35, 38) à l'extérieur de la pale (13).

8. Aube selon l'une quelconque des revendications 1 à 7, la pale (13) comprenant un deuxième circuit de refroidissement interne (236, 237, 238) identique au circuit de refroidissement interne (233, 241, 235), notamment dans laquelle la première paroi interne (245) du premier circuit de refroidissement interne est confondue avec la deuxième paroi interne du deuxième circuit de refroidissement interne.

9. Aube selon l'une quelconque des revendications 1 à 8, comprenant une baignoire à son extrémité radialement externe (14), et dans laquelle le premier circuit de refroidissement interne comprend une cavité d'extrados auxiliaire (41, 137, 234) s'étendant radialement le long de la paroi d'extrados (18) et configurée pour alimenter une cavité de refroidissement (42) de la baignoire.

10. Turbomachine (100) comprenant une aube selon l'une quelconque des revendications 1 à 9.

## Patentansprüche

1. Schaufel (10) für eine Turbine, umfassend einen Schaufelfuß (12), der ein radial inneres Ende der Schaufel definiert, und ein Blatt (13, 113, 213), das sich von dem Schaufelfuß (12) aus radial nach außen erstreckt und eine druckseitige Wand (16) und eine saugseitige Wand (18) aufweist, die mit der druckseitigen Wand (16) an einer Vorderkante (20) und einer Hinterkante (22) des Blatts verbunden ist, wobei das Blatt (13, 113, 213) zumindest einen ersten inneren Kühlkreis umfasst, der zumindest einen druckseitigen Hohlraum (33, 36), der sich radial entlang der druckseitigen Wand (16) und einer ersten Innenwand (47, 45) erstreckt, die zwischen der druckseitigen Wand (16) und der saugseitigen Wand (18) angeordnet ist, und zumindest einen saugseitigen Hohlraum (34, 37) beinhaltet, der sich radial entlang der saugseitigen Wand (18) und einer zweiten Innenwand (47, 43) erstreckt, die zwischen der druckseitigen Wand (16) und der saugseitigen Wand (18) angeordnet ist, **dadurch gekennzeichnet, dass** der erste Kühlkreis ferner zumindest einen querverlaufenden inneren Hohlraum (35, 38) beinhaltet, der zwischen zwei querverlaufenden Wänden (59, 57, 55, 53) definiert ist, die sich jeweils zwischen der druckseitigen Wand (16) und der saugseitigen Wand (18) erstrecken, wobei der querverlaufende innere Hohlraum (35, 38) sich radial entlang der druckseitigen Wand (16) und der saugseitigen Wand (18) erstreckt, wobei der druckseitige Hohlraum (33, 36), der saugseitige Hohlraum (34, 37) und der querverlaufende innere Hohlraum (35, 38) fluidmäßig in Reihe verbunden sind, und wobei der druckseitige Hohlraum (36, 233, 236) und der saugseitige Hohlraum (37, 241, 237) auf beiden Seiten des querverlaufenden inneren Hohlraums (38, 235, 238) angeordnet sind und ein Durchgang (68) den druckseitigen Hohlraum (37, 241, 237) fluidmäßig mit dem saugseitigen Hohlraum (37, 241, 237) verbindet, ohne den querverlaufenden inneren Hohlraum (38, 235, 238) zu passieren.

2. Schaufel nach Anspruch 1, wobei der druckseitige Hohlraum (33, 36), der saugseitige Hohlraum (34, 37) und der querverlaufende innere Hohlraum (35, 38) in dieser Reihenfolge fluidmäßig in Reihe verbunden sind.

3. Schaufel nach Anspruch 1 oder 2, wobei die erste Innenwand (45) mit einer ersten der querverlaufenden Wände (55, 57) verbunden ist, und die zweite Innenwand (43, 47) mit einer zweiten (53, 59) der querverlaufenden Wände verbunden ist.

4. Schaufel nach einem der Ansprüche 1 bis 3, umfassend eine dritte querverlaufende Wand (53, 55, 57, 59, 61), die mit der ersten Innenwand (45) oder der zweiten Innenwand (43, 47) verbunden ist, wobei der innere Kühlkreis einen zweiten querverlaufenden Hohlraum (38, 35, 39) beinhaltet, der sich radial entlang der druckseitigen Wand, der saugseitigen Wand und der dritten querverlaufenden Wand (53, 55, 57, 59, 61) erstreckt.

5. Schaufel nach einem der Ansprüche 1 bis 4, wobei, in Bezug auf den querverlaufenden inneren Hohlraum (38, 235, 238), der druckseitige Hohlraum (36, 233, 236) auf der Seite der Hinterkante (22) angeordnet ist und der saugseitige Hohlraum (37, 241, 237) auf der Seite der Vorderkante (20).

6. Schaufel nach einem der Ansprüche 1 bis 5, wobei die erste Innenwand (47, 45) und die zweite Innenwand (47, 43) jeweils von zwei querverlaufenden Wänden (61, 59, 57, 55, 53, 51) begrenzt werden, wobei jede querverlaufende Wand (61, 59, 57, 55, 53, 51) sich zwischen der druckseitigen Wand (16) und der saugseitigen Wand (18) erstreckt.

7. Schaufel nach einem der Ansprüche 1 bis 6, wobei die druckseitige Wand (16) zumindest eine Öffnung (35c, 38c) aufweist, die den querverlaufenden inneren Hohlraum (35, 38) mit dem Äußeren des Blatts (13) verbindet.

8. Schaufel nach einem der Ansprüche 1 bis 7, wobei das Blatt (13) einen zweiten inneren Kühlkreis (236, 237, 238) umfasst, der mit dem inneren Kühlkreis (233, 241, 235) identisch ist, wobei insbesondere die erste Innenwand (245) des ersten inneren Kühlkreises mit der zweiten Innenwand des zweiten inneren Kühlkreises zusammenfällt.

9. Schaufel nach einem der Ansprüche 1 bis 8, umfassend eine Wanne an ihrem radial äußeren Ende (14), und wobei der erste innere Kühlkreis einen zusätzlichen saugseitigen Hohlraum (41, 137, 234) umfasst, der sich radial entlang der saugseitigen Wand (18) erstreckt und dazu ausgestaltet ist, einen Kühlungshohlraum (42) der Wanne zu speisen.

10. Turbomaschine (100), umfassend eine Schaufel nach einem der Ansprüche 1 bis 9.

## Claims

1. A blade (10) for a turbine, comprising a blade root (12) defining a radially inner end of the blade and an airfoil (13, 113, 213) extending radially outwards from the blade root (12) and having an intrados wall (16) and an extrados wall (18) connected to the intrados wall (16) at a leading edge (20) and a trailing edge (22) of the airfoil, the airfoil (13, 113, 213) comprising at least a first internal cooling circuit including at least one intrados cavity (33, 36) extending radially along the intrados wall (16) and along a first inner wall (47, 45) arranged between the intrados wall (16) and the extrados wall (18), at least one extrados cavity (34, 37) extending radially along the extrados wall (18) and along a second inner wall (47, 43) arranged between the intrados wall (16) and the extrados wall (18), **characterized in that** the first cooling circuit further includes at least one inner through cavity (35, 38) defined between two through walls (59, 57, 55, 53) each extending between the intrados wall (16) and the extrados wall (18), the inner through cavity (35, 38) extending radially along the intrados wall (16) and the extrados wall (18), wherein the intrados cavity (33, 36), the extrados cavity (34, 37) and the inner through cavity (35, 38) are fluidly connected in series, and wherein the intrados cavity (36, 233, 236) and the extrados cavity (37, 241, 237) are arranged on either side of the inner through cavity (38, 235, 238) and a passage (68) fluidly connects the intrados cavity (37, 241, 237) to the extrados cavity (37, 241, 237) without passing through the inner through cavity (38, 235, 238).

2. The blade according to claim 1, wherein the intrados cavity (33, 36), the extrados cavity (34, 37) and the inner through cavity (35, 38) are fluidly connected in series in this order.

3. The blade according to claim 1 or 2, wherein the first inner wall (45) is connected to a first one of said through walls (55, 57) and the second inner wall (43, 47) is connected to a second one (53, 59) of said through walls.

4. The blade according to any one of claims 1 to 3, comprising a third through wall (53, 55, 57, 59, 61) connected to the first inner wall (45) or to the second inner wall (43, 47), the internal cooling circuit including a second through cavity (38, 35, 39) extending radially along the intrados wall, the extrados wall and the third through wall (53, 55, 57, 59, 61).

5. The blade according to any one of claims 1 to 4, wherein the intrados cavity (36, 233, 236) is arranged on the trailing edge (22) side and the extrados cavity (37, 241, 237) is arranged on the leading edge (20) side with respect to the inner through cavity (38, 235, 238).

6. The blade according to any one of claims 1 to 5, wherein the first inner wall (47, 45) and the second inner wall (47, 43) are each delimited by two through walls (61, 59, 57, 55, 53 , 51), each through wall (61, 59, 57, 55, 53, 51) extending between the intrados wall (16) and the extrados wall (18).

7. The blade according to any one of claims 1 to 6, wherein the intrados wall (16) has at least one orifice (35c, 38c) connecting the inner through cavity (35, 38) to the outside of the airfoil (13).

8. The blade according to any one of claims 1 to 7, the airfoil (13) comprising a second internal cooling circuit (236, 237, 238) identical to the internal cooling circuit (233, 241, 235), in particular wherein the first inner wall (245) of the first internal cooling circuit is merged with the second inner wall of the second internal cooling circuit.

9. The blade according to any one of claims 1 to 8, comprising a tub at its radially outer end (14), and wherein the first internal cooling circuit comprises an auxiliary extrados cavity (41, 137, 234) extending radially along the extrados wall (18) and configured to supply a cooling cavity (42) of the tub.

10. A turbomachine (100) comprising a blade according to any one of claims 1 to 9.
